# EUROPÄISCHE PATENTSCHRIFT

(11) **EP 1 057 399 B1**
(45) Veröffentlichungstag und Bekanntmachung des Hinweises auf die Patenterteilung: **07.01.2009**
(21) Anmeldenummer: 00110693.9
(22) Anmeldetag: 19.05.2000
(51) Int. Cl.: A01D 61/04, B65G 23/44

(54) **Landwirtschaftliche Erntemaschine**
Agricultural harvesting machine
Machine de récolte agricole

(30) Priorität: 04.06.1999 DE 19925691
(43) Veröffentlichungstag der Anmeldung: 06.12.2000
(73) Patentinhaber: CLAAS Selbstfahrende Erntemaschinen GmbH, 33428 Harsewinkel (DE)
(72) Erfinder: Buhne, Hubert, 48324 Sendenhorst (DE)
(74) Vertreter: Klesper, Hanns-Otto

(56) Entgegenhaltungen:
- DE-A- 2 946 951
- DE-A- 3 531 552
- DE-A- 3 604 488
- DE-A- 4 308 084
- DE-C- 854 444
- DE-U- 7 810 844
- US-A- 4 362 005

## Beschreibung

Die Erfingung betrifft eine landwirtschaftliche Erntemaschine, beispielsweise einen Mähdrescher mit mehreren Fördereinrichtungen, die jeweils mit einem umlaufend antreibbaren Zugmittelförderer ausgerüstet sind, der über auf achsparallelen Wellen drehfest aufgesetzten Kettenrädern geführt ist, wobei eine der Wellen mittels einer Spanneinrichtung gegenüber der anderen Welle verschiebbar ist.

Sofern die landwirtschaftliche Erntemaschine ein Mähdrescher ist, ist dieser in der Standardausführung mit drei Kettenförderern ausgestattet. Mittels eines Kettenförderers wird das Erntegut vom Mähtisch zum Dreschwerk transportiert. Mittels eines weiteren Förderers, des sogenannten Überkehrförderers, erfolgt eine Rückführung von ungedroschenem Gut von der Siebeinrichtung zum Dreschwerk und mittels des dritten Förderers werden die Körner in den Korntank transportiert. Der erstgenannte Einzugsförderer ist aufgrund seiner Breite im Normalfall mit zwei Förderketten ausgestattet, während die beiden anderen Förderer jeweils mit einer Förderkette ausgerüste sind. Diese beiden Förderer sind mit einer Zwischenwand ausgestattet, die mittig zwischen zwei parallelen Gehäusewandungen steht. Durch die Zwischenwand wird das Fördertrum von dem Leertrum getrennt. Die beiden Außenwände gehören zum als geschlossen anzusehenden Gehäuse des Kettenförderers. Es ist allgemein bekannt, daß bei Kettenförderern jede Kette vorgespannt sein muß. Diese Vorspannung muß regelmäßig vor Arbeitsbeginn geprüft und ggf. nachgestellt werden. Auch bei längerem Stillstand der Maschine zwischen den Ernteperioden sollten die Förderkette entlastet sein. Aus diesem Grunde ist jeder Kettenförderer bislang mit einer mechanischen Spanneinrichtung ausgestattet. Diese Spanneinrichtung ist mit vorgespannten Federn ausgestattet, um Überlastungen der Kette aufzufangen bzw. um einen Riß der Kette zu verhindern. Eine Erntemaschine mit entsprechender Spanneinrichtung ist z.B. aus der US-A-4362 005 bekannt.

Derartige Ausführungen haben sich bewährt. Nachteilig ist jedoch, daß zur Montage zwei Personen notwendig sind. Das Spannen und Entspannen der Ketten ist umständlich und dementsprechend zeitaufwendig. Außerdem ist die Spanneinrichtung insgesamt konstruktiv aufwendig. Bei den täglichen Inspektionen der Erntemaschine vor Arbeitsbeginn ist jede einzelne Kettenspannungen zu berücksichtigen.

Der Erfindung liegt die Aufgabe zugrunde, eine konstruktiv einfache und insbesondere montage- und servicefreundliche Ausführung vorzuschlagen, die ein Spannen und Entspannen in äußerst kurzer Zeit zuläßt. Die gestellte Aufgabe wird durch eine Landwirtschattliche Eruteuavhene nach Anspruch 1 gelöst, Dem mindestens einen Kettenfördereristeine Spanneinrichtung zugeordnet , die mindestens eine steuerbare Verstelleinheit aufweist, dessen Verstellsteil mittels eines Gestänges und/oder Anschlußteilen mit der verschiebbaren Welle des jeweiligen Kettenförderers gekoppelt sind, wobei die Steuerung der Verstelleinheit die Beaufschlagung der Verstelleinheit mit dem ihr zugeordueten lydraulischen Druck bei jedeum Start des Antriebsmotors des Grutemaschine umfast.

Als Spannelement der erfindungsgemäßen Spanneinrichtung ist beispielsweise ein Hydraulikzylinder anzusehen, wobei nicht auszuschließen ist, daß mechanische Linearverstelleinrichtungen mit motorischem Antrieb ebenso Verwendung finden könnten. Ein solcher Zylinder kann problemlos von einer Person montiert werden. Zum Spannen der Förderkette wird der Hydraulikzylinder mit Drucköl beaufschlagt. Dies erfolgt durch entsprechend ausgelegte Ventile. Da eine landwirtschaftliche Erntemaschine ohnehin über eine Hydraulikanlage verfügt, ist der Mehraufwand äußerst gering. Die dem Hydraulikzylinder noch zuzuordnenden Bauteile zum Verschieben der Welle sind einfache Bauteile, die einfach zu montieren sind und ebenso wie der Hydraulikzylinder eine hohe Lebensdauer haben. Die Anordnung des Hydraulikzylinders beziehungsweise der Hydraulikzylinder sowie die Gestaltung des Gestänges oder der Anschlußteile richtet sich nach Größe und Lage des Förderers innerhalb der Maschine.

So ist vorgesehen, daß die verschiebbare Welle in zwei, außen neben den Gehäusewänden des Kettenförderers angeordneten Schwenkhebeln gelagert ist, und daß an jeden Schwenkhebel ein Ende einer Koppelstange angelenkt ist, und daß die anderen Enden der beiden Koppelstangen über eine Traverse aus das Varstellteil angelenkt sind. Diese Ausführung ist besonders dann zu empfehlen, wenn die Breite des Kettenförderers relativ groß ist, beispielsweise bei dem Einzugskettenförderer. Es ist jedoch auch möglich, daß an jede Koppelstange ein Hydraulikzylinder angeschlossen ist, wobei beide Hydraulikzylinder im Gleichlauf steuerbar sind. Dadurch kann die Spannkraft erhöht werden. Eine günstige Übertragung der von dem Hydraulikzylinder beziehungsweise von den Hydraulikzylindern aufgebrachten Kräfte ergibt sich, wenn die verschiebbare Welle mittig oder annähernd mittig zwischen den Schwenkachsen der Schwenkhebel und den Anlenkpunkten der Koppelstangen an den Schwenkhebeln gelagert ist. Die Schwenkhebel sind dann einarmige Hebel, so daß sich ein sehr hohes, auf die verschiebbare Welle wirkendes Moment ergibt, da der Hebelarm relativ groß ist. Aus Platzgründen kann es zweckmäßig sein, wenn die Traverse und der Hydraulikzylinder außen an der Schwenkachse der Schwenkhebel zugewandten Wand des Gehäuses angeordnet sind und daß die Traverse oder die Kolbenstangen in einem Langloch eines Führungsprofils geführt ist beziehungsweise sind. In diesem Fall würde zwar die Koppelstange schräg zur Förderrichtung des Kettenförderers stehen, der Hydraulikzylinder beziehungsweise die Hydraulikzylinder wären jedoch zugänglich. Das Führungsprofil ist an der gleichen Wand des Gehäuses angeordnet wie die Hydraulikzylinder.

Sofern der Kettenförderer eine parallel und im Abstand zu zwei paralellen Gehäusewänden stehende Zwischenwand aufweist, ist vorgesehen, daß der Hydraulikzylinder an der Zwischenwand angelenkt ist und daß seine Kolbenstange einen U-förmigen Gabelkopf trägt, in der die verschiebbare Welle gelagert ist. Diese Ausführung ist besonders für den Kettentransport zum Körnertransport und für die Rückführung von Dreschgut zur Drescheinrichtung geeignet, da diese Förderer relativ schmal sind. Die Ausführung ist konstruktiv äußerst einfach, da die ohnehin vorhandene Zwischenwand benutzt wird und mittels des Gabelkopfes die Lagerung für die verschiebbare Welle hergestellt wird. Damit es jedoch nicht zu einem Verecken oder Verkanten der verschiebbaren Welle kommen kann, ist vorgesehen, daß sie in Schlitzen von zwei paralellen Gehäusewandungen geführt ist. Zur Aufnahme des Hydraulikzylinders ist die Zwischenwand mit einer entsprechenden Aussparung vorgesehen, die vorzugsweise Y-förmig ist. In einfachster konstruktiver Ausführung, die außerdem noch bedienungsfreundlich ist, ist vorgesehen, daß die Hydraulikzylinder aller Kettenförderer gemeinsam steuerbar sind und in jeder zu einem Hydraulikzylinder führenden Druckleitung ein Rückschlagventil angeordnet ist und daß mittels einer ein Steuerventil aufweisenden Bypassleitung die Hydraulikzylinder entlastbar sind. Durch eine derartige Gestaltung ist es möglich, alle Hydraulikzylinder gleichzeitig zu beaufschlagen, so daß die Ketten gespannt werden. Sie werden dann zwar mit dem gleichen Druck beaufschlagt, sofern jedoch unterschiedliche Spannkräfte notwendig sind, kann dies durch unterschiedliche Kolbendurchmesser erreicht werden. Das Rückschlagventil verhindert einen Rücklauf des Öls, sofern dann jedoch die Entlastung eines Hydraulikzylinders notwendig ist, erfolgt dies durch die Bypassleitung. Bei jedem erneuten Starten des Antriebsmotors der Erntemaschine werden gleichzeitig alle Kettenspanneinrichtungen mit den ihnen zugeordneten hydraulischen Drücken selbsttätig versorgt und die Kolbenzylindereinheiten ggf. nachgefüllt. Als besonders vorteilhaft und völlig ausreichend bietet sich hierfür daß maschinenseititg vorhandene Niederdruckhydrauliksystem an.

Anhand der beiliegenden Zeichnungen wird die Erfindung noch näher erläutert. Es zeigen:
- Figur 1: den vorderen Bereich einer landwirtschaftlichen Erntemaschine in Form eines Mähdreschers mit drei Kettenfördern,
- Figur 2: die Spanneinrichtung einer ersten Ausführungsform in einer Seitenansicht,
- Figur 3: die Spanneinrichtung nach der Figur 2 in einer Vorderansicht,
- Figur 4: die Spanneinrichtung in einer zweiten Ausführungsform in einer Seitenansicht,
- Figur 5: die Spanneinrichtung nach der Figur 4 in einer Vorderansicht und
- Figur 6: ein Blockschaltbild zur Steuerung der Hydraulikzylinder.

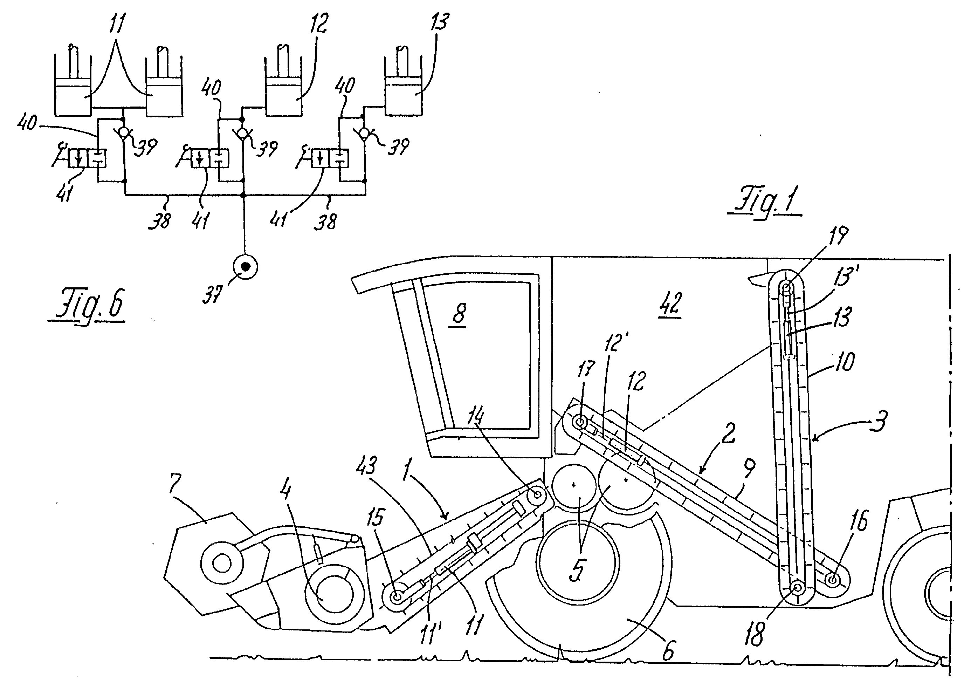

Der in der Figur 1 dargestellte vordere Teil eines Mähdreschers ist mit drei Kettenförderern 1, 2 und 3 ausgestattet. Der Kettenförderer 1 fördert das von einer Einzugsschnecke 4 antransportierte Erntegut zu einem andeutungsweise dargestellten Dreschwerk 5. Der Kettenförderer 1 liegt zwischen der Einzugsschnecke 4 und den angetriebenen Vorderrädern 6 des Mähdreschers. Er verläuft in Richtung zu den Vorderrädern 6 ansteigend. Der Überkehrförderer 2 fördert unvollständig gedroschenes Erntegut zurück zum Dreschwerk 5. Der Kettenförderer 3 fördert die ausgesiebten Körner in den Korntank 42. Der vordere Bereich des Mähdreschers ist außerdem noch mit einer schwenkbaren Haspel 7 und einer Fahrerkabine 8 ausgestattet. Der das Erntegut einziehende Kettenförderer 1 weist vorzugsweise zwei Förderketten auf, während die beiden anderen Kettenförderer 2 und 3 mit nur einer Förderkette ausgerüstet sind. Die beiden Kettenförderer 2 und 3 sind außerdem innerhalb von Gehäusen 9 und 10 angeordnet, die als geschlossen angesehen werden können. Die noch näher erläuterten Spanneinrichtungen sind mit gesteuerten Hydraulikzylindern 11, 12 und 13 ausgestattet. Der Kettenförderer 1 ist mit einer ortsfesten antreibbaren Welle 14 und einer verschiebbaren Welle 15 ausgestattet. Entsprechend ist der Förderer 2 mit einer ortsfesten, antreibbaren Welle 16 und einer verschiebbaren Welle 17 ausgerüstet. In gleicher Weise ist der Kettenförderer 3 mit einer ortsfesten antreibbaren Welle 18 und einer verschiebbaren Welle 19 ausgestattet. An den Ketten des Förderers 1 sind in Abstand zueinander stehende Förderleisten und bei den Förderern 2 und 3 Förderbleche 29 an den Ketten befestigt.

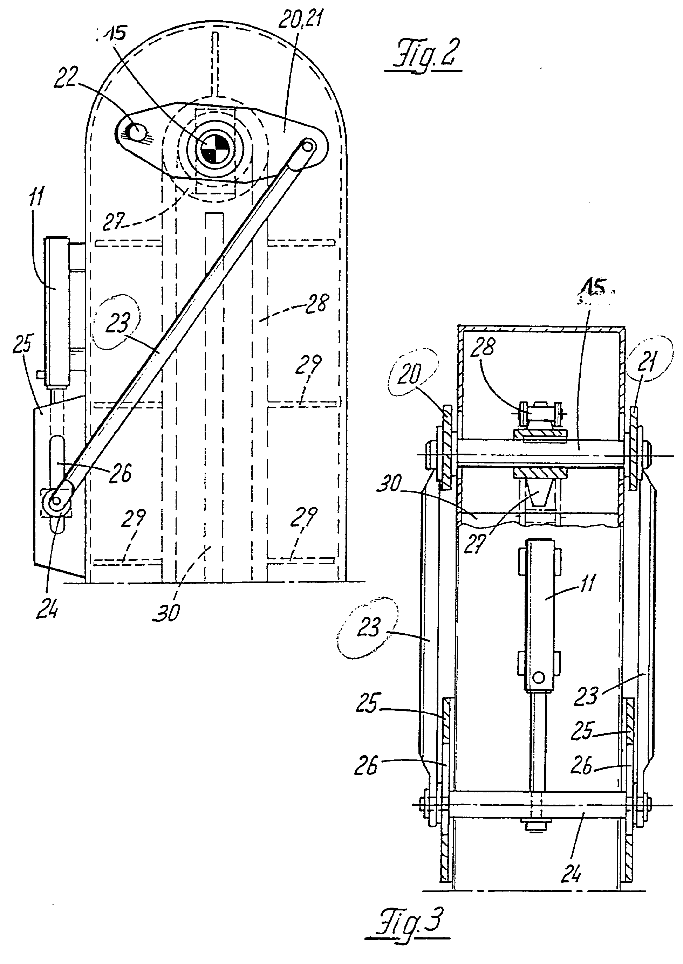

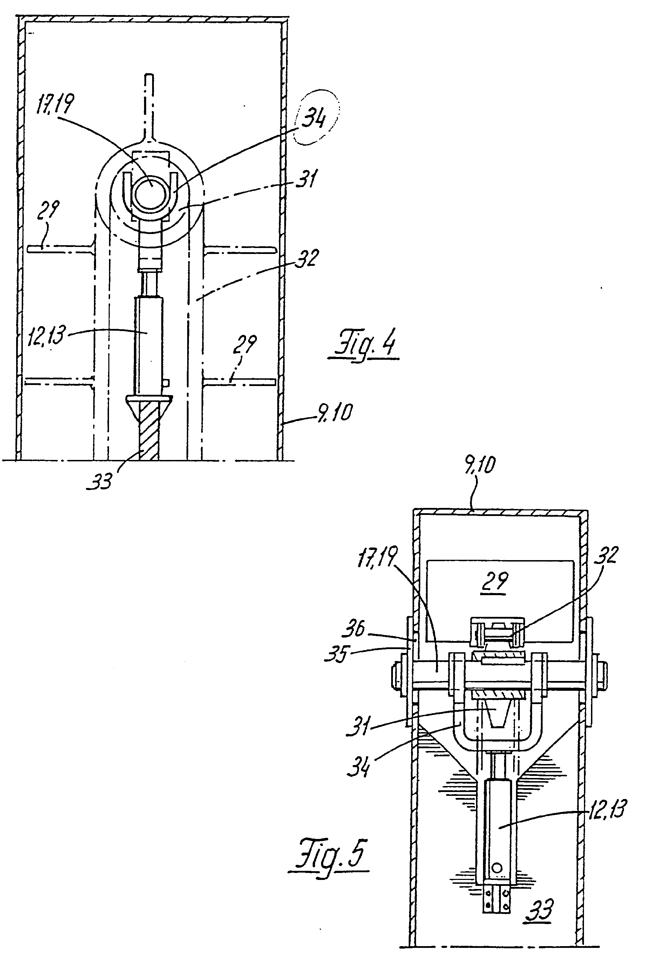

Bei der Ausführung nach den Figuren 2 und 3 ist die verschiebbare Welle 15 in zwei Schwenkhebeln 20, 21 drehbar gelagert, wobei die Schwenkachse 22 im achsparallelen Versatz zur Welle 15 steht. An die gegenüberliegenden Enden der Schwenkhebel 20, 21 sind Koppelstangen 23 angelenkt. Die gegenüberliegenden Enden der beiden Koppelstangen sind auf eine Traverse 24 gesteckt, an die mittig die Kolbenstange des Hydraulikzylinders 11 angreift. Dieser Hydraulikzylinder 11 ist an die Wand des Gehäuses angesetzt, die der Schwenkachse 22 zugewandt liegt. Wie die Figur 2 zeigt, liegt die Welle 15 etwa mittig zwischen der Schwenkachse 22 und den Anlenkpunkten der Koppelstange 23. An die gleiche Wand des Gehäuses sind zwei Führungsprofile 25 festgelegt, welche mit Langlöchern 26 versehen sind, in denen die Traverse 24 geführt ist. Im Gegensatz zu der gezeichneten Ausführung könnte die Spanneinrichtung auch zwei Hydraulikzylinder 11 beeinhalten, die an die zugeordneten Enden der beiden Koppelstangen 23 angelenkt sind. Die Hydraulikzylinder 11 sind dann im Gleichlauf steuerbar. Auf die Welle 15 ist ein andeutungsweise dargestelltes Kettenrad 27 drehfest aufgesetzt, über das die Förderkette 28 geführt ist. An die Förderkette 28 sind im Abstand zueinander stehende Förderplatten 29 befestigt. Auf die ortsfeste Welle 14 ist ebenfalls ein baugleiches Kettenrad drehfest aufgesetzt, um die Förderkette 28 umlaufend anzutreiben. Die Ausführung nach den Figuren 4 und 5 trifft bevorzugt für die Kettenförderer 2 und 3 zu. Auf die Wellen 17 beziehungsweise 19 ist ebenfalls ein Kettenrad 31 drehfest aufgesetzt, über welches eine Förderkette 32 geführt ist. Die Kettenförderer 2 und 3 sind mit Zwischenwänden 33 ausgestattet, die unterhalb der Wellen 17, 19 Ausparungen aufweisen, in die Hydraulikzylinder 12, 13 eingesetzt sind. Auf die Kolbenstangen der Hydraulikzylinder 12, 13 sind U-förmige Gabelköpfe 34 befestigt, in den die Wellen 17, 19 gelagert sind. Die Wellen sind durch die beiden rechtwinklig dazu stehenden Gehäusewände geführt. Auf die Enden sind außen am Gehäuse gleitende Führungsscheiben 35 angeordnet. Zur Verschiebung der Wellen 17, 19 sind in den beiden rechtwinklig dazu stehenden Gehäusewänden Langlöcher 36 vorgesehen, um einen Freiraum für die Wellen 17, 19 zu schaffen. Die unteren Wellen 16, 18, sind ortsfest gelagert und in nicht näher dargestellter Weise antreibbar. Außerdem sind auch darauf zu den Kettenrädern 31 baugleiche Kettenräder aufgesetzt. Auch die Förderketten 32 sind mit Förderplatten 29 bestückt.

Das Schaltbild nach der Figur 6 zeigt, daß für den Kettenförderer 1 zwei Hydraulikzylinder 11 verwendet werden, während für die Kettenförderer 2 und 3 nur jeweils ein Hydraulikzylinder 12, 13 zum Einsatz kommt. Das Blockschaltbild zeigt ferner, daß alle Hydraulikzylinder 11, 12, 13 von einer gemeinsamen Druckquelle 37 über Druckleitungen 38 mit Drucköl beaufschlagt werden. In den Zuleitungen zu den Hydraulikzylindern 11, 12, 13 sind Rückschlagventile 39 derart installiert, daß das Drucköl nur in der Richtung fließen kann, in der die Kolben der Hydraulikzylinder 11, 12, 13 ausfahren. Zur Entspannung sind in Bypassleitungen 40 gesteuerte Ventile 41 vorgesehen, so daß auch wahlweise entweder die beiden Zylinder 11 oder der Zylinder 12 oder 13 entspannt werden kann.

### Bezugszeichenliste

- 1 -: Kettenförderer
- 2 -: Kettenförderer
- 3 -: Kettenförderer
- 4 -: Einzugsschnecke
- 5 -: Dreschwerk
- 6 -: Vorderräder
- 7 -: Haspel
- 8 -: Fahrerkabine
- 9 -: Gehäuse
- 10 -: Gehäuse
- 11 -: Verstelleinheit; Hydraulikzylinder
- 12 -: Verstelleinheit; Hydraulikzylinder
- 13 -: Verstelleinheit; Hydraulikzylinder
- 11' -: Verstellteil
- 12' -: Verstellteil
- 13' -: Verstellteil
- 14 -: Welle
- 15 -: Welle
- 16 -: Welle
- 17 -: Welle
- 18 -: Welle
- 19 -: Welle
- 20 -: Schwenkhebel
- 21 -: Schwenkhebel
- 22 -: Schwenkachse
- 23 -: Koppelstange
- 24 -: Traverse
- 25 -: Führungsprofil
- 26 -: Langloch
- 27 -: Kettenrad
- 28 -: Förderkette
- 29 -: Förderplatte
- 30 -: Zwischenwand
- 31 -: Kettenrad
- 32 -: Förderkette
- 33 -: Zwischenwand
- 34 -: Gabelkopf
- 35 -: Führungsplatte
- 36 -: Langloch
- 37 -: Druckquelle
- 38 -: Druckleitung
- 39 -: Rückschlagventil
- 40 -: Bypassleitung
- 41 -: Ventil
- 42 -: Korntank
- 43 -: Förderketten

## Patentansprüche

1. Landwirtschaftliche Erntemaschine, insbesondere Mähdrescher, mit mindestens einem Kettenförderer, der jeweils mit wenigstens einer umlaufend antreibbaren Förderkette ausgerüstet ist, die über auf achsparallelen Wellen drehfest aufgesetzten Kettenrädern geführt ist, wobei eine der Wellen mittels einer Spanneinrichtung gegenüber der anderen Welle verschiebbar ist,
**dadurch gekennzeichnet,**
**dass** zumindest einem Kettenförderer (1, 2, 3) eine Spanneinrichtung zugeordnet ist, die mindestens eine steuerbare Verstelleinheit (11, 12, 13) aufweist, deren Verstellteil mittels eines Gestänges (20, 21, 23) und/oder Anschlussteilen (34) mit der verschiebbaren Welle (15, 17, 19) des jeweiligen Kettenförderers (1, 2, 3) gekoppelt ist und wobei die landwistschaftliche Erntenaschine So ausgestattet ist, dass die Steuerbarkeit der Verstelleinheit (11, 12, 13) die Beaufschlagung der Verstelleinheit (11, 12, 13) mit dem ihr zugeordneten hydraulischen Druck bei jedem Start des Antriebmatars der Erntemaschine umfasst.

2. Landwirtschaftliche Erntemaschine nach Anspruch 1,
**dadurch gekennzeichnet,**
**daß** die verschiebbare Welle (15) in zwei außen neben den Gehäusewänden des Kettenförderers (1, 2, 3) angeordneten Schwenkhebeln (20, 21) gelagert ist, daß an jedem Schwenkhebel (20, 21) ein Ende einer Koppelstange (23) angelenkt ist und das die anderen Enden der beiden Koppelstangen (23) über eine Traverse (24) an das Verstellteil der jeweiligen Verstelleinheit (11, 12, 13) angelenkt sind.

3. Landwirtschaftliche Erntemaschine nach Anspruch 2,
**dadurch gekennzeichnet,**
**daß** die verschiebbare Welle (15) mittig oder annähernd mittig zwischen der Schwenkachse (22) der Schwenkhebel (20, 21) und den Anlenkpunkten der Koppelstangen (23) in den Schwenkhebeln (20, 21) gelagert ist.

4. Landwirtschaftliche Erntemaschine nach Anspruch 2,
**dadurch gekennzeichnet,**
**daß** die Kolbenstangen von zwei im Gleichlauf steuerbaren Hydraulikzylindern (11) an die den Schwenkhebeln (20, 21) abgewandten Enden der Koppelstangen (23) angelenkt sind.

5. Landwirtschaftliche Erntemaschine nach einem oder mehreren der vorhergehenden Ansprüche 1 bis 4
**dadurch gekennzeichnet,**
**daß** die Traverse (24) oder die Kolbenstangen der Hydraulikzylinder (11) in Langlöchern (26) von Führungsprofilen (25) geführt sind.

6. Landwirtschaftliche Erntemaschine nach Anspruch 5,
**dadurch gekennzeichnet,**
**daß** die Führungsprofile außenseitig an der der Schwenkachse (22) der Schwenkhebel (20, 21) zugeordneten Wand des Gehäuses angesetzt sind.

7. Landwirtschaftliche Erntemaschine nach Anspruch 1
**dadurch gekennzeichnet,**
**dass** jeder Kettenförderer (2, 3) eine parallel im Abstand zu den beiden parallelen Gehäusewänden des Kettenförderers (2, 3) stehende Zwischenwand (33) aufweist und die als Hydraulikzylinder (12,13) ausgeführte Verstelleinheit (12, 13) an der Zwischenwand (33) angelenkt ist und dass die jeweilige Kolbenstange über einen U-förmigen Gabelkopf (34) trägt, in dem die verschiebbare Welle (17, 19) drehbar gelagert ist.

8. Landwirtschaftliche Erntemaschine nach Anspruch 7,
**dadurch gekennzeichnet,**
**daß** jede verschiebbare Welle (17, 19) in Langlöchern (36) oder Schlitzen von zwei parallelen Gehäusewänden geführt ist.

9. Landwirtschaftliche Erntemaschine nach einem oder mehreren der vorhergehenden Ansprüche 1 bis 8,
**dadurch gekennzeichnet,**
**daß** mindestens zwei Hydraulikzylinder (11, 12, 13) mehrer Kettenförderer (1, 2, 3) gemeinsam steuerbar sind und daß in jeder Zuführleitung zu einem Hydraulikzylinder (11, 12, 13) ein Rückschlagventil (39) installiert ist, und daß mittels einer ein Steuerventil (41) aufweisenden Bypassleitung (40) die Hydraulikzylinder (11, 12, 13) entlastbar sind.

## Claims

1. An agricultural harvesting machine, in particular a combine harvester, comprising at least one chain conveyor respectively provided with at least one conveyor chain which is drivable in rotation and which is guided over chain wheels fitted rotationally fixedly on shafts with their axes parallel, wherein one of the shafts is displaceable with respect to the other shaft by means of a tensioning device,
**characterised in that** associated with at least one chain conveyor (1, 2, 3) is a tensioning device having at least one controllable adjusting unit (11, 12, 13) whose adjusting member is coupled to the displaceable shaft (15, 17, 19) of the respective chain conveyor (1, 2, 3) by means of a linkage (20, 21, 23) and/or connecting members (34) and wherein the agricultural harvesting machine is so designed that the controllability of the adjusting unit (11, 12, 13) includes acting upon the adjusting unit (11, 12, 13) with the hydraulic pressure associated therewith upon each start-up of the drive engine of the harvesting machine.

2. An agricultural harvesting machine according to claim 1 **characterised in that** the displaceable shaft (15) is mounted in two pivotal levers (20, 21) arranged externally beside the housing walls of the chain conveyor (1, 2, 3), an end of a coupling rod (23) is pivotably connected to each pivotal lever (20, 21) and the other ends of the two coupling rods (23) are pivotably connected by way of a transverse member (24) to the adjusting member of the respective adjusting unit (11, 12, 13).

3. An agricultural harvesting machine according to claim 2 **characterised in that** the displaceable shaft (15) is supported centrally or approximately centrally between the pivot axis (22) of the pivotal levers (20, 21) and the pivotal connecting points of the coupling rods (23) in the pivotal levers (20, 21).

4. An agricultural harvesting machine according to claim 2 **characterised in that** the piston rods of two hydraulic cylinders (11) controllable in synchronous relationship are pivotably connected to the ends, remote from the pivotal levers (20, 21), of the coupling rods (23).

5. An agricultural harvesting machine according to one or more of preceding claims 1 to 4 **characterised in that** the transverse member (24) or the piston rods of the hydraulic cylinders (11) are guided in slots (26) of guide profile members (25).

6. An agricultural harvesting machine according to claim 5 **characterised in that** the guide profile members are fitted externally to the wall of the housing, that is associated with the pivot axis (22) of the pivotal levers (20, 21).

7. An agricultural harvesting machine according to claim 1 **characterised in that** each chain conveyor (2, 3) has an intermediate wall (33) disposed in spaced parallel relationship with the two parallel housing walls of the chain conveyor (2, 3) and the adjusting unit (12, 13) which is in the form of a hydraulic cylinder (12, 13) is pivotably mounted to the intermediate wall (33) and the respective piston rod carries a U-shaped fork head (34) in which the displaceable shaft (17, 19) is rotatably mounted.

8. An agricultural harvesting machine according to claim 7 **characterised in that** each displaceable shaft (17, 19) is guided in slots (36) or slits of two parallel housing walls.

9. An agricultural harvesting machine according to one or more of preceding claims 1 to 8 **characterised in that** at least two hydraulic cylinders (11, 12, 13) of a plurality of chain conveyors (1, 2, 3) are jointly controllable and that a check valve (39) is installed in each feed line to a hydraulic cylinder (11, 12, 13) and that the hydraulic cylinders (11, 12, 13) can be relieved of load by means of a bypass line (40) having a control valve (41).

## Revendications

1. Machine de récolte agricole, en particulier moissonneuse-batteuse, avec au moins un convoyeur à chaîne qui est chaque fois équipé d'au moins une chaîne qui peut être entraînée en révolution et qui est guidée sur des roues à chaîne montées en rotation solidaires sur des arbres axialement parallèles, un des arbres pouvant être déplacé par rapport à l'autre arbre au moyen d'un dispositif de tension,
**caractérisée**
**en ce qu'**à au moins un convoyeur à chaîne (1, 2, 3) est associé un dispositif de tension qui présente au moins une unité de réglage commandable (11, 12, 13) dont l'élément de réglage est couplé au moyen d'une tringlerie (20, 21, 23) et / ou de pièces de connexion (34) avec l'arbre déplaçable (15, 17, 19) du convoyeur à chaîne (1, 2, 3) en question et la machine de récolte agricole étant équipée de telle manière que la possibilité de commander l'unité de réglage (11, 12, 13) comprend l'application à l'unité de réglage (11, 12, 13) de la pression hydraulique y afférente lors de chaque démarrage du moteur d'entraînement de la machine de récolte.

2. Machine de récolte agricole selon la revendication 1, **caractérisée en ce que** l'arbre déplaçable (15) est supporté dans deux leviers pivotants (20, 21) disposés à l'extérieur à côté des parois de logement du convoyeur à chaîne (1, 2, 3), **en ce qu'**une extrémité d'une bielle d'accouplement (23) est articulée à chaque levier pivotant (20, 21) et **en ce que** les autres extrémités des deux bielles d'accouplement (23) sont articulées par l'intermédiaire d'une traverse (24) à l'élément de réglage de l'unité de réglage (11, 12, 13) en question.

3. Machine de récolte agricole selon la revendication 2, **caractérisée en ce que** l'arbre déplaçable (15) est supporté au centre ou approximativement au centre entre les axes de pivotement (22) des leviers pivotants (20, 21) et les points d'articulation des bielles d'accouplement (23) dans les leviers pivotants (20, 21).

4. Machine de récolte agricole selon la revendication 2, **caractérisée en ce que** les tiges de piston de deux vérins hydrauliques (11) commandables de manière synchronisée sont articulées aux extrémités des bielles d'accouplement (23) opposées aux leviers pivotants (20, 21).

5. Machine de récolte agricole selon l'une quelconque des revendications précédentes 1 à 4, **caractérisée en ce que** la traverse (24) ou les tiges de piston des vérins hydrauliques (11) sont guidées dans des trous oblongs (26) de profils de guidage (25).

6. Machine de récolte agricole selon la revendication 5, **caractérisée en ce que** les profils de guidage placés du côté extérieur contre la paroi du logement associée à l'axe de pivotement (22) des leviers pivotants (20, 21).

7. Machine de récolte agricole selon la revendication 1, **caractérisée en ce que** chaque convoyeur à chaîne (2, 3) présente une paroi intermédiaire (33) située parallèlement à distance des deux parois parallèles du logement du convoyeur à chaîne (2, 3) et l'unité de réglage réalisée en tant que vérin hydraulique (12, 13) est articulée à la paroi intermédiaire (33) et **en ce que** la tige de piston en question porte une tête de fourche (34) en forme de U dans laquelle l'arbre déplaçable (17, 19) est supporté de manière rotative.

8. Machine de récolte agricole selon la revendication 7, **caractérisée en ce que** chaque arbre déplaçable (17, 19) est guidé dans des trous oblongs (36) ou des fentes de deux parois parallèles du logement.

9. Machine de récolte agricole selon une ou plusieurs des revendications précédentes 1 à 8, **caractérisée en ce qu'**au moins deux vérins hydrauliques (11, 12, 13) de plusieurs convoyeurs à chaîne (1, 2, 3) sont conjointement commandables et **en ce qu'**un clapet anti-retour est installé dans chaque conduite d'alimentation d'un vérin hydraulique (11, 12, 13) et **en ce que** les vérins hydrauliques (11, 12, 13) peuvent être déchargés au moyen d'une conduite de dérivation (40) présentant une soupape de commande (41).
